# EUROPEAN PATENT APPLICATION

(11) **EP 2 264 343 A2**
(43) Date of publication of application: **22.12.2010**
(21) Application number: 10251049.2
(22) Date of filing: 08.06.2010
(51) Int. Cl.: F16K 11/078

(54) **Liquid mixer valve**

(30) Priority: 08.06.2009 GB 0909705
(71) Applicant: Malone, Jason, Somerset BA6 8AQ (GB)
(72) Inventor: Malone, Jason, Somerset BA6 8AQ (GB)

(57) **Abstract**

The present invention is directed to a mixer valve for e.g. dispensing flavoured beverages at the point of sale. An example of such a beverage is a flavoured cider, which comprises a base cider and a flavoured mixer. The present invention enables the user to select a desired flavoured mixer from a selection of mixers and dispense the mixed beverage, all with one valve. The mixer valve has an inlet body (10) and a selector body (30) having respective mating surfaces in sealing contact with one another. The inlet body (10) comprises a base liquid inlet channel arranged to receive a base liquid and having an opening at the mating surface of the inlet body, a first mixer inlet channel arranged to receive a first mixer liquid and having an opening at the mating surface of the inlet body (10), and a second mixer inlet channel arranged to receive a second mixer liquid and having an opening at the mating surface of the inlet body (10). The selector body (30) comprises one or more base liquid control channels, the or each channel having an opening at the mating surface of the selector body (30), and a mixer inlet selection channel having an opening at the mating surface of the selector body (30). The respective openings of the respective channels are arranged with respect to each other such that relative movement of the mating surfaces permits switching between a first selection configuration and a second selection configuration. In the first selection configuration the opening of the base liquid control channel or the opening of one of the base liquid control channels of the selector body (30) overlaps with the opening of the base liquid inlet channel of the inlet body (10), and the opening of the mixer inlet selector channel of the selector body (30) overlaps with the opening of the first mixer inlet channel of the inlet body (10). In the second selection configuration the opening of the base liquid control channel or the opening of one of the base liquid control channels of the selector body (30) overlaps with the opening of the base liquid inlet channel of the inlet body (10), and the opening of the mixer inlet selector channel of the selector body (30) overlaps with the opening of the second mixer inlet channel of the inlet body (10).

## Description

This invention relates generally to a liquid mixer valve and particularly to a mixer liquid valve which distributes a beverage comprising a base liquid and one or more of a number of mixer liquids.

Flavoured beers and ciders are commonly produced by mixing a base beverage and a mixer such as fruit juice or cordial. The proportion of mixer varies depending on the flavour desired. Currently the mixing process is performed at the production stage and distributed in bottles or barrels.

The present invention proposes a valve allowing one or more of a number of flavoured mixer liquids to be selected from and added to a flow of base alcoholic beverage and for said combination to be poured. The combination of a valve and tap allows flavoured beers and ciders to be created at the point of sale.

It is known that within the hospitality industry and particularly in pubs, bars, nightclubs and other entertainment venues, display and point of sale space is limited and a valuable commodity. It may be desirable for such venues to offer flavoured beers and ciders to their customers. In such a scenario it may be found that space within refrigerators or for fonts on the bar-top is limited and for this reason the range of flavours offered is compromised or the sale of flavoured beers and ciders is deemed impractical. With multiple flavours selectable via a valve and said flavours combining with a base cider, perry or beer to be poured as a single beverage, a number of different flavoured beers and ciders can be made available for minimal space within a venue.

It is known to provide dispensers of cider and beer using taps mounted on a bar distributing from barrels of both said beverages and flavoured varieties of said beverages. For a range of flavours to be offered using this existing method it is required that individual barrels of each flavoured cider or beer be stored in the cellar and distributed through individual taps. A known alternative method of storing flavoured cider and beer for sale in hospitality venues is to store bottled ciders and beers in fridges. Both of these methods require large amounts of space and so restrict the range of flavours deemed practical to offer.

The present invention proposes feeding a supply of mixer liquids such as fruit juices, concentrates or cordials to a valve via a suitable method such as an electric pump or gas pressure. This valve may be moved by the user to select none, one or more from the supplied flavours. This valve may align to distribute the selected liquid into a chamber where it is mixed with a base cider or beer to form the required flavoured cider or beer beverage. A tap may be connected to the chamber and when the handle is moved into the on position the mixed beverage is poured at its opening. With the valve in the on position the liquids may continue to flow into a mixing chamber and through the tap until the valve is moved to the off position.

Thus, at its most general, the present invention proposes a mixer valve which enables a user to select between a configuration in which flow of a base liquid and a first mixer liquid is enabled and a configuration in which flow of the base liquid and a second mixer liquid is enabled. In this way, the user can choose which mixer liquid is added to the base liquid at the point of delivery, i.e., in the case of a flavoured beverage, at the bar-mounted tap.

In a first aspect, the present invention proposes a mixer valve for dispensing a mixed beverage, the mixer valve having: an inlet body and a selector body having respective faces (e.g. mating surfaces) opposed to one another (i.e. facing one another, or in sealing contact with one another), the inlet body comprising: a base liquid inlet channel arranged to receive a base liquid and having an opening at the face of the inlet body; a first mixer inlet channel arranged to receive a first mixer liquid and having an opening at the face of the inlet body; and a second mixer inlet channel arranged to receive a second mixer liquid and having an opening at the face of the inlet body, and the selector body comprising: one or more base liquid control channels, the or each channel having an opening at the face of the selector body; and a mixer inlet selection channel having an opening at the face of the selector body, wherein the respective openings of the respective channels are arranged with respect to each other such that relative movement of the opposed faces of the inlet body and selector body permits switching between:
a first selection configuration in which the opening of the base liquid control channel or the opening of one of the base liquid control channels of the selector body overlaps with the opening of the base liquid inlet channel of the inlet body, and the opening of the mixer inlet selector channel of the selector body overlaps with the opening of the first mixer inlet channel of the inlet body; and
a second selection configuration in which the opening of the base liquid control channel or the opening of one of the base liquid control channels of the selector body overlaps with the opening of the base liquid inlet channel of the inlet body, and the opening of the mixer inlet selector channel of the selector body overlaps with the opening of the second mixer inlet channel of the inlet body.

In this way, it is possible to mix a base beverage, such as cider, with a flavoured mixer, such as a fruit cordial, at the point of sale. Typically, the volume of mixer liqod will be substantially smaller than the volume of base liquid, e.g. 20% or less than, 10% or less than, or 5% or less than.

The respective openings of the respective channels of the selector body and inlet body may be arranged with respect to each other such that relative movement of the inlet body and selector body by relative sliding of the opposed faces permits switching between the first or second selection configuration and a flush-through configuration in which the opening of the base liquid control channel or the opening of one of the base liquid control channels of the selector body overlaps with the opening of the base liquid inlet channel of the inlet body, and there is no overlap between the opening of the mixer inlet selector channel of the selector body and the opening of the first or second mixer inlet channels of the inlet body. In this way, residue left in the mixing chamber from previous mixer liquid selections can be washed away prior to mixing and dispensing a new mixed beverage. In use, the user may cycle from a closed configuration in which there is no flow to the first or second selection configuration, via the flush-through configuration.

The valve may include a motor arranged to move the selector body relative to the inlet body and a controller arranged to control the motor, the controller having a line cleaning mode in which it controls the motor to switch the valve between the first selection configuration and second selection configuration. In this way, a user can select the line cleaning mode to sequentially open up each of the flow routes of the base liquid, first mixer liquid and second mixer liquid to enable them to be flushed through with a cleaning fluid or rinsing water.

The selector body may be rotatable relative to the inlet body about a rotation axis to permit the relative movement of the inlet body and selector body by relative sliding of the opposed faces. The selector body may further be slidable relative to the inlet body so that the rotation axis of the selector body moves linearly with respect to the inlet body, the sliding permitting switching between the first or second switching configuration and a closed configuration in which there is no overlap of the openings of the channels of the inlet body and the openings of the channels of the selector body. Thus, the desired mixer can be selected by rotation of the selector body, and the mixed beverage dispensed by linear sliding of the selector body. There is thus no risk of dispensing during selection of mixer liquid.

As an alternative to stopping flow by linear sliding of the selector body, the valve may include a flow control body having a face (e.g. a mating surface) opposed to a face of the selector body (e.g. the face opposed to the face of the inlet body, or a face opposing that face), the flow control body being rotatable relative to the selector body about the rotation axis of the selector body, and the flow control body comprising: a base liquid flow control channel having an opening at the face of the flow control body; a first mixer flow control channel having an opening at the face of the flow control body; and a second mixer flow control channel having an opening at the face of the flow control body, wherein the respective openings of the respective channels of the flow control body are arranged with respect to each other such that relative rotation of the flow control body and the selector body by relative sliding of the opposed faces permits switching between the first or second selection configuration and a closed configuration in which there is no overlapping of the openings of the channels of the selector body and the openings of the channels of the flow control body.

The respective openings of the first and second mixer inlet channels, first and second mixer flow control channels, and mixer inlet selection channel may each be circular and the centres of each opening may be radially offset from the rotation axis by a first distance (i.e. each offset by the same distance). In such a case, the circumferential distance between the first and second mixer inlet channels will be the same as that between the first and second mixer flow control channels.

The respective openings of the base liquid inlet channel and the one or more base liquid control channels may each be circular and the centres of each opening may be radially offset from the rotation axis by a second distance (i.e. each offset by the same distance) which is different from the first distance. The circumferential distance between each of the one or more base liquid control channels may be the same as the respective circumferential distances between the first and second mixer inlet channels and first and second mixer flow control channels.

The valve may include a mixing chamber in fluid communication with the one or more base liquid control channels and the mixer inlet selection channel of the selector body. The selector body may include a mixed fluid control channel having an opening at the mating surface of the selector body and being in fluid communication with the mixing chamber, and the inlet body may include a mixed fluid outlet channel having an opening at the mating surface of the inlet body, the mixed fluid control channel and mixed fluid outlet channel being arranged such that in the first or second selection configurations the openings of the mixed fluid outlet channel and mixed fluid control channel overlap one another.

The inlet body and selector body may comprise plate members, each of the respective channels extending through the thickness of the respective plate member. Alternatively, the selector body may comprise a hollow cylindrical member having an inner surface forming the mating surface of the selector body, and the inlet body may comprise a cylindrical member having an outer surface forming the mating surface of the inlet body, the cylindrical member being located within the hollow cylindrical member of the selector body so that its outer surface is in sealing contact with the inner surface of the hollow cylindrical member.

The valve may include a handle connected to the selector body to permit movement by a user of the selector body relative to the inlet body.

The present invention encompasses use of a mixer valve according to the first aspect and any of the variations described within to mix an alcoholic beverage such as cider, perry or beer with a flavoured mixer liquid.

In a second aspect, the present invention proposes a method of mixing a beverage using a mixer valve, the mixer valve having: an inlet body and a selector body having respective faces opposed to one another, the inlet body comprising: a base liquid inlet channel arranged to receive a base liquid and having an opening at the face of the inlet body; a first mixer inlet channel arranged to receive a first mixer liquid and having an opening at the face of the inlet body; and a second mixer inlet channel arranged to receive a second mixer liquid and having an opening at the face of the inlet body, and the selector body comprising: one or more base liquid control channels, the or each channel having an opening at the face of the selector body; and a mixer inlet selection channel having an opening at the face of the selector body,
the method including the step of moving the selector body relative to the inlet body by relative sliding of the opposed faces to achieve either:
overlap of the opening of the base liquid control channel or the opening of one of the base liquid control channels of the selector body with the opening of the base liquid inlet channel of the inlet body, and simultaneous overlap of the opening of the mixer inlet selector channel of the selector body with the opening of the first mixer inlet channel of the inlet body; or
overlap of the opening of the base liquid control channel or the opening of one of the base liquid control channels of the selector body with the opening of the base liquid inlet channel of the inlet body, and simultaneous overlap of the opening of the mixer inlet selector channel of the selector body with the opening of the second mixer inlet channel of the inlet body.

In a third aspect, the present invention proposes a method of line cleaning using a mixer valve according to any of claims 1 to 9, the method including the steps of: inputting a cleaning fluid into the base fluid inlet channel, first mixer inlet channel and second fluid inlet channel; selecting the first selection configuration, whereby the cleaning fluid passes from the base fluid inlet channel into the base liquid control channel and from the first mixer inlet channel into the mixer inlet selection channel; and selecting the second selection configuration, whereby the cleaning fluid passes from the base fluid inlet channel into the base liquid control channel and from the second mixer inlet channel into the mixer inlet selection channel.

The optional, or preferable, features discussed above and below may be applied to any aspect of the present invention, either alone or in any workable combination.

The valve may comprise a series of discs whereby a first part contains a number of orifices for the input of both base and mixer liquids, a second part contains a number of orifices which enable the selection and pouring of the liquids and a third part contains a chamber where the liquids mix before exiting. The first, second and third parts seal against each other via a suitable means such as through contact of highly polished surfaces or the use of o-rings. The selection of the desired flavour occurs by manoeuvring the second and third parts with respect to the first part to planar align the mixer selection orifice located on the second part with the desired one or more mixer liquid input orifices located on the first part. A further position may be present in which the mixer selection orifice aligns with none of the mixer input orifices allowing only the base liquid to flow during pouring. The flow of the selected mixer liquid may be started by moving the second and third parts with respect to the first in a linear fashion concentrically aligning the mixer selection orifice located on the second part with one or more desired mixer input orifices located on the first part. Simultaneously the base liquid orifice located on the second part aligns with the base liquid input orifice located on the first part controlling the flow of the base liquid. Upon this linear action the base liquid and selected mixer liquid pass into the chamber located in the third part where they combine and exit via the output orifices on the first and second parts. Alternatively the functions on the previously mentioned second and third parts may be combined onto a single disc.

The motions required to operate the second part of the disc valve in the manner mentioned previously may be created using a suitable means of mechanically biasing such as a combination of a ball joint pivot point on a lever arm and a sliding universal joint. The rotation of the lever arm turns the universal joint simultaneously causing the rotation action required for the ceramic discs to select from the available mixers. Applying a force in a linear direction causes the lever to pivot around the ball joint moving the middle disc in a linear direction in a fixed plane in any of the selectable positions. These motions allow the invention to select mixer through rotation when in the off position and to control flow through the valve via a linear motion in a fixed plane regardless of selected mixer. Pouring in a fixed plane allows the invention to mimic the typical fixed plane pull motion seen in many beverage dispensing taps. Alternatively the rotation motion required could be achieved by rotating the middle disc through direct interaction manually or mechanically using an appropriate method such as a geared motor whilst the linear motion could be achieved by mechanical actuation using direct interaction from a sliding pin or mechanically using a suitable method such as a rack and pinion or lead screw.

Alternatively said valve may comprise a first cylindrical part located within a second outer part. The first part may contain a mixer selection orifice and a base liquid orifice which open into a chamber. This chamber is connected to an output tap through which the mixed beverage may flow. The second part contains a number of orifices to which the input mixer and base liquids are supplied. The first part may be rotated with respect to the second part to planar align the mixer selection orifice with the desired input mixer. The first part may then be moved linearly with respect to the second part to coaxially align the mixer selection orifice and one or more desired input mixer orifices, simultaneously the base orifice on the first part aligns with the base input orifice in the second part. This linear movement can control the flow of these liquids and therefore the pouring of the beverage.

The previously mentioned valve may comprise a series of discs whereby a first and fourth part contains a number of orifices for the input of both base and mixer liquids, a second part contains a number of orifices which enable the selection of the mixer liquids and a third part contains a number of orifices which control the flow of the mixer and base liquids into a chamber where the liquids mix before exiting. The first, second, third and fourth parts seal against each other via a suitable means such as through contact of highly polished surfaces or the use of o-rings. The selection of the desired flavour occurs by rotating the second part with respect to the first part to concentrically align the mixer selection orifice located on the second part with the desired one or more mixer liquid input orifices located on the first part. The flow of both the mixer liquid selected and the base liquid may be controlled by rotating the third part with respect to the first to one of three positions. In a first position the third part is rotated to ensure the selection orifices and the base liquid orifice are not aligned with the mixer input orifices and base liquid orifice in the first and fourth parts. In a second position the third part is rotated to ensure the selection orifices in the third part are not aligned with the selection orifices in the first and fourth parts and the base liquid orifice in the third part is aligned with the base liquid input orifice in the first and fourth parts. In a third position the third part is rotated to ensure the selection orifices in the third part and the mixer input orifices in the first and fourth parts are concentrically aligned and the base liquid orifice in the third part and the base input orifice in the first and fourth parts are aligned. In the first position neither the mixer nor base liquids are flowing. In the second position the base liquid flows into a mixing chamber and out of the valve the mixer liquid does not flow. In the third position the base liquid and the selected mixer liquid flow into the mixing chamber and out of the valve.

The motions required to operate the second part and third parts of the disc valve in the manner mentioned previously may be created using a suitable means of mechanically biasing such as geared motors with a rotational position feedback such as a potentiometer. These motions allow the invention to select a mixer through rotation of the second part and control the flow of the mixer and base liquids through rotation of the third part. Alternatively the rotational motion of the second and third parts could be achieved with mechanical interaction of the user through rotation of a handle or collar.

Further there may be a number of stages during operation of the valve. A first stage where by all orifices are misaligned and no flow is occurring to be followed by a second stage where the mixer selection orifice and one or more desired mixer input orifices are aligned and the base liquid orifices are also aligned enabling flow of both liquids. A third stage may then occur where by the base liquid orifices are aligned and flow enabled however the mixer selection orifice and desired mixer input orifice are misaligned preventing the flow of mixer and enabling the flow of base liquid causing the system to be flushed through. During use of the invention the third stage may occur between the second and first to remove contamination of flavours between pours.

The parts may be housed within a casing so as to maintain the physical relationship between the parts at all times. It is known for bar taps to be integrated into a variety of fonts for use at the bar to enable customisation of appearance. Housing the previously mentioned parts within a suitable case creates a valve which can be integrated into a number of housings for use in a variety of font designs.

The previously mentioned case may have integrated a suitable method of connecting the liquid supplies such as hose connectors or moulded push fits. The case may also have integrated a suitable method of connection for a tap such as a screw thread or push fit.

It is known that for a user to best interact with a product which uses a selection process a method of feedback is advantageous to alert the user to the selection made. This could be in the form of visual feedback, audible or tactile feedback. In the current invention a tactile feedback system may be integrated to give the user a physical indication that a selection position has been reached and that the desired orifices within the valve are aligned for pouring. This feedback may take the form of a spring moulded into the casing or fixed into the casing in such a position which locates against the moving parts. A geometric feature on moving parts correspond to the selection positions so that upon the alignment of the selection orifice on required mixer input resistance to motion is at its minimum. This reduction in resistance to motion indicates to the user that a selection position has been reached. Alternatively springs could be located on the moving parts at points corresponding to the positions for selection and locate against a suitable shape in the casing. Alternatively a suitable electronic position sensor such as a series of micro-switches operated by a geometric feature on the discs could be used in conjunction with a visual or audible electronic indicator such as light emitting diodes or an LCD screen to indicate the selection made.

During the linear motion of the parts it would be a disadvantage for rotation to be enabled as this could lead to a change of mixer causing contamination of the output beverage. To prevent this, the casing may shaped to include one or a number of flat edges which locate against the flat edges on the middle disc during the linear motion to prevent rotation. Alternatively the lever geometry could be shaped as to locate against the casing or a feature in the font to prevent rotation during the lever pull action.

The present invention will now be more particularly described, by way of example, with reference to accompanying drawings, in which:
Figure 1 is a plan view of a first part of a liquid mixer valve according to an embodiment of the present invention;
Figure 2 is a plan view of a second part of a liquid mixer valve according to an embodiment of the present invention;
Figure 3 is a plan view of a third part of a liquid mixer valve according to an embodiment of the present invention;
Figure 5 is an exploded perspective view of a first part, second part and third part of a liquid mixer valve according to an embodiment of the present invention;
Figure 6 is a diagrammatic plan view of the first, second and third parts of a liquid mixer valve with the second and third parts in a first position.
Figure 7 is a diagrammatic plan view of the first, second and third parts of a liquid mixer valve with the second and third parts in a second position.
Figure 8 is a diagrammatic plan view of the first, second and third parts of a liquid mixer valve with the second and third parts in a third position.
Figure 9 is a diagrammatic plan view of the first, second and third parts of a liquid mixer valve with the second and third parts in an alternative first position.
Figure 10 is a diagrammatic section of a liquid mixer valve.
Figure 11 is a perspective view of a liquid mixer valve in an exploded state.
Figure 12 is a side view of a liquid mixer valve integrated into a bar tap.
Figures 13 to 15 are perspective views of a liquid mixer valve formed according to a further embodiment.
Figure 16 is a plan view of a first part of a liquid mixer valve formed according to a yet further embodiment.
Figure 17 is a plan view of a second part of a liquid mixer valve formed according to a yet further embodiment.
Figure 18 is a plan view of a third part of a liquid mixer valve formed according to a yet further embodiment.
Figure 19 is an exploded perspective view of a first part, second part and third part of a liquid mixer valve formed according to the yet further embodiment.
Figure 20 is a diagrammatic plan view of the first, repeated first, second and third parts of a liquid mixer valve formed according to the yet further embodiment with the second and third parts in a first position.
Figure 21 is a diagrammatic plan view of the first, repeated first, second and third parts of a liquid mixer valve formed according to the yet further embodiment with the second and third parts in a second position.
Figure 22 is a diagrammatic plan view of the first, repeated first, second and third parts of a liquid mixer valve formed according to the yet further embodiment with the second and third parts in a third position.
Figure 23 is a perspective view of a liquid mixer valve formed according to the yet further embodiment in an exploded state.

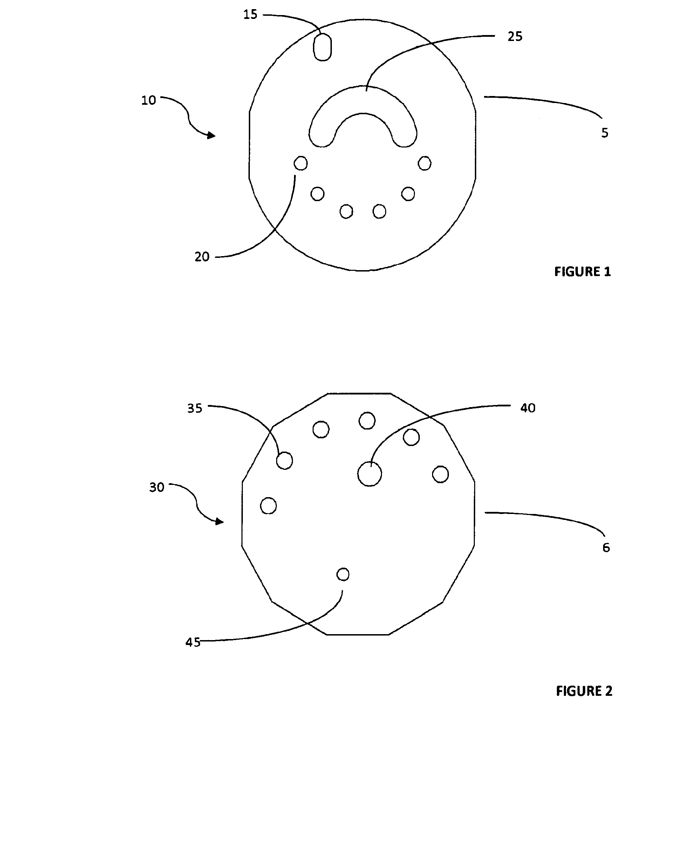

Referring first to figure 1 there is shown a first part 10 (inlet part, or inlet body) of liquid mixer value formed according to the present invention. The first part 10 compromises a plate 5 with a pattern of orifices 20 (mixer inlet orifices, or channels) which extend through the body, an orifice 15 (base liquid inlet orifice, or channel) which extends through the body and an output orifice 25 (mixed liquid outlet orifice, or channel) which extends through the body. The pattern of orifices 20 is present as inputs for mixer liquids. The orifice 15 is present as the input for a base liquid and the orifice 25 is present as the output for a mixed liquid consisting of the base and mixer liquids.

Referring now to figure 2 there is shown a second part 30 (selector part, or selector body) of a liquid mixer valve formed according to the present invention. The second part 30 compromises a plate 6 with a pattern of orifices 35 (base liquid inlet control orifices, or channels), an orifice 45 (mixer inlet selection orifice, or channel) and an orifice 40 (mixed liquid control orifice, or channel) which extend through the body. The pattern of orifices 35 is present as the flow control for a base liquid. The orifice 45 is present as the selection and flow control orifice for mixer liquids and the orifice 40 is present as a flow control for a mixed liquid consisting of the base and mixer liquids.

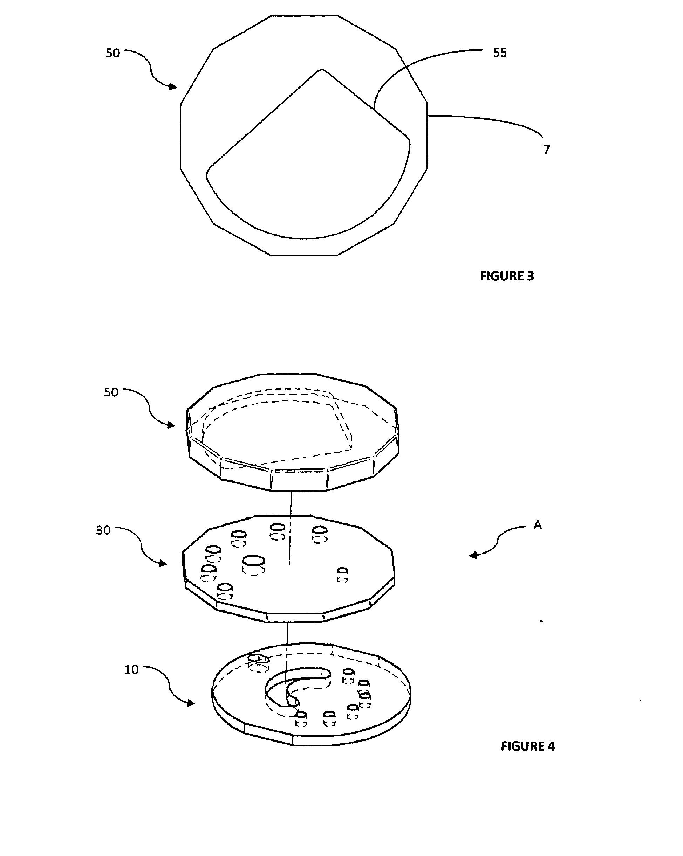

Referring now to figure 3 there is shown a third part 50 (mixing part, or mixing body) of a liquid mixer valve formed according to the present invention. Part 50 comprises a plate 7 with a recess 55 partially extruded into the body. The recess 55 extends from a surface of the plate 7 which mates with a mating surface of the second part 30 through a partial thickness of the plate 7, so that the recess 55 forms a hollow or well in the plate 7. The recess 55 is shaped so that, when the surface of the plate 7 mates with the mating surface of the second part 30, the base liquid inlet control channels 35, mixer inlet selection channel 45, and mixed liquid control channel 40 are in fluid communication with the recess 55. In this way, the recess 55 acts as a mixing chamber where base and mixer liquids are combined when flow is permitted into the recess 55 via the channels/orifices 35, 40, 45 of the second part 30.

Referring now to figure 4 there is shown the sub assembly A of the parts in figure 1, figure 2 and figure 3 in an exploded view.

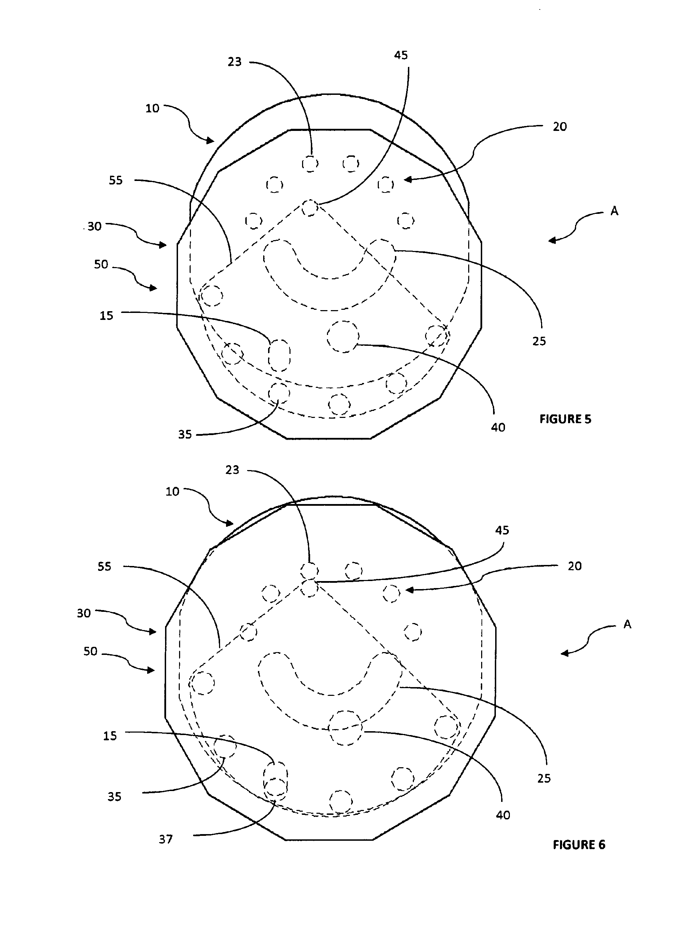

Referring now to figures 5, 6, 7, 8, 9 and 10 the first second and third parts 10, 30 and 50 are shown placed together to form a sub assembly A of a liquid mixer valve.

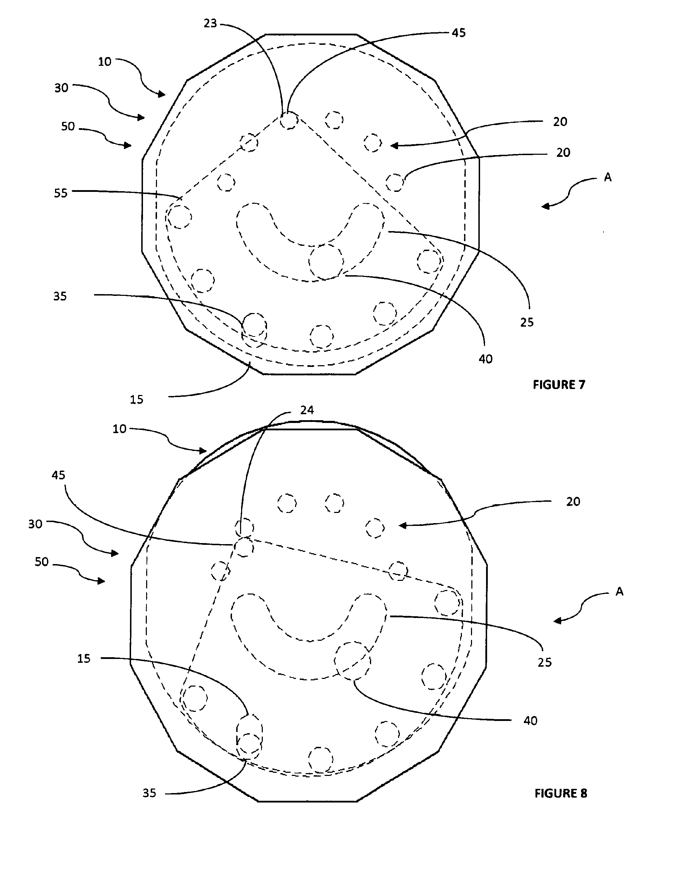

In figure 5 the second and third parts 30, 50 (which do not move relative to one another) are shown are shown in a first position (closed position) with respect to the first part 10. In said first position the second and third parts 30, 50 have been rotated with respect to the first part to planar align the mixer inlet selection orifice 45 present on the second part 30 (selector part) with the desired mixer inlet orifice 23 from the pattern of orifices 20 present on the first part 10 (inlet part). Simultaneously the desired base liquid control orifice 37 from the pattern of orifices 35 present on the second part 30 planar aligns with the base liquid inlet orifice 15 present on the first part 10. That is, the second 30 and first 10 parts are arranged so that the mixer inlet orifice 23 is offset from the mixer inlet selection orifice 45 along a given linear axis by a given distance, and the base liquid control orifice 37 is offset from the base liquid inlet orifice 15 along the same linear axis by the same given distance. In this way, relative linear (straight line) movement along a single axis by a given amount causes the mixer inlet and base liquid inlet orifices to become aligned, i.e. overlapped, as shown in Figure 7 and described below.

In figure 6 the second and third parts 30, 50 have been moved linearly from the first position shown in figure 5 to a second position (flush-through position) with respect to a first part 10. In said second position the base liquid control orifice 35 in the second part 30 is aligned with the base fluid inlet orifice 15 to allow the flow of the base liquid into the recess 55 (mixing chamber) in the third part 50. Simultaneously the mixed liquid control orifice 40 in the second part 30 is aligned with the mixed liquid control orifice 40 to allow the flow of the base liquid from the recess 55.

In figure 7 the second and third parts 30, 50 have been moved linearly from the second position shown in figure 6 to a third position (selection position) with respect to a first part 10. In said third position the base liquid control orifice 37 in the second part 30 is aligned with the base liquid inlet orifice 15 to allow the flow of the base liquid into the recess 55 in the third part 50. Simultaneously the mixer inlet selection orifice 45 in the second part 30 is aligned with the mixer inlet orifice 23 in the first part 10 to allow the flow of a mixer liquid into the recess 55 in the third part 50. Simultaneously the mixed liquid control orifice 40 in the second part 30 is aligned with the mixed liquid outlet orifice 25 in the first part 10 to allow the flow of the mixed base liquid and mixer liquid from the recess 55.

In figure 8 the second and third parts 30, 50 are shown are shown in an alternative second position (alternative flush-through position) with respect to a first part 10. In said alternative second position the second and third parts 30, 50 have been rotated with respect to the first part to planar align the selection orifice 45 present on the second part 30 with the desired orifice 24 from the pattern of orifices 20 present on the first part 10. Simultaneously the orifice 36 present on the second part 30 planar aligns with the orifice 15 present on the first part 10. The difference from the second position shown in Figure 6 is that a different mixer inlet orifice 20 has been selected, so that a different mixer fluid will be dispensed when the valve is arranged in the selection position.

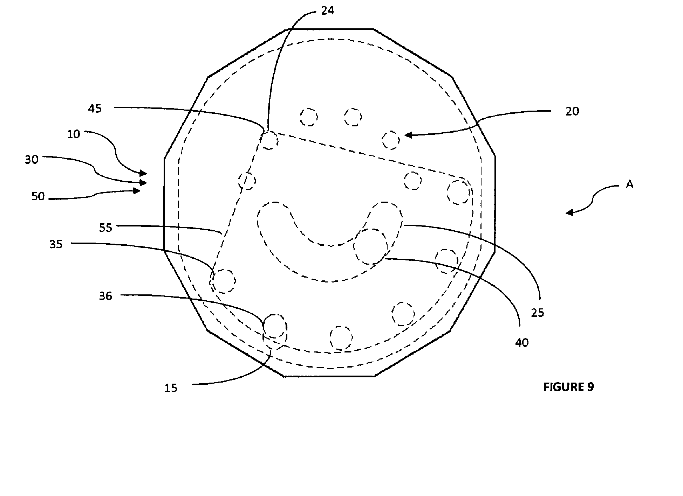

In figure 9 the second and third parts 30, 50 have been moved linearly from the alternative second position in figure 8 to an alternative third position (alternative selection position) with respect to a first part 10. In said third position the selected base liquid control orifice 36 of the pattern of orifices 35 in the second part 30 is aligned with the base liquid inlet orifice 15 in the first part 10 to allow the flow of the base liquid into the recess 55 in the third part 50. Simultaneously the mixer inlet selection orifice 45 in the second part 30 is aligned with the selected mixer inlet orifice 24 in the first part 10 to allow the flow of mixer liquid into the recess 55 in the third part 50. Simultaneously the mixed liquid control orifice 40 in the second part 30 is aligned with the mixed liquid outlet orifice 40 to allow the flow of the base liquid from the recess 55.

Through these operations the liquid mixer valve allows the user to select from a number of flavoured mixer liquids and combine them with a base cider, beer or perry to form a single output of flavoured beverage.

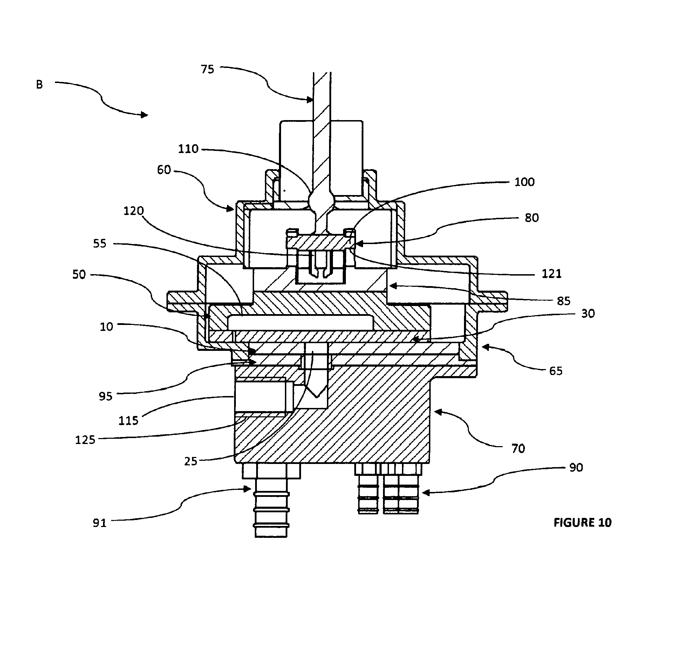

Referring now to figure 10 there is shown a liquid mixer valve B. The sub assembly A shown in figure 5 comprising a first, second and third part 10, 30, 50 is contained within a case which in this instance consists of parts 60, 65, and 70. Within the lower case part 70 there is an outlet orifice 115 which is in fluid communication with the mixed fluid outlet orifice 25 in the first part 10 shown in figure 1. Also within the lower casing part 70 there are a series of inlet orifices (not shown) which are in fluid communication with the series of mixer inlet orifices 20 within the first part 10 shown in figure 1. These inlet orifices allow the flow of the mixer liquids into the valve and have a suitable means of connecting to a series of supply pipes (not shown) which in this instance is a threaded side wall with pipe connectors 90 inserted. Also within the lower case is an inlet orifice (not shown) aligned with the base liquid inlet orifice 15 in the first part 10 shown in figure 1. This nlet orifice allows the flow of the base liquid into the valve and has a suitable means of connecting to a supply pipe (not shown) which in this instance is a threaded side wall with a pipe connector 91 inserted. The outlet orifice 115 includes a suitable means for connection to a tap, e.g. a beer tap. In this instance the connection means is a threaded side wall 125. The part 95 is a disc with a series of orifices (not shown) mimicking those present in the first part 10 shown in figure 1 containing a suitable method of sealing against both the lower casing 70 and the first part 10, which in this instance is o-rings. In this instance the second and third parts 30, 50 seen in figure 5 are moved relative to the first part 10 by a combination of a lever arm 75, a ball and socket joint 110 and a sliding universal joint comprising a central part 100 with outer arms in a cross shape 80 inserted into a set of outer arms with an integrated slot 120 connected to the lever arm and a set of outer arms with an integrated slot 121 connected to the third part 50 shown in figure 5. Rotation of the lever arm 75 causes rotation of the second and third parts 30, 50 seen in figure 5 relative to the first part 10 to allow selection of the desired mixer liquid as describe in figures 5,6,7,8 and 9 . Linear motion of the lever arm 75 causes the lever arm 75 to pivot around the ball and socket joint 110 and move the second and third parts 30, 50 relative to the first part 10 in a linear motion to control the flow of the base and mixer liquids as described in figures 5,6,7,8 and 9.

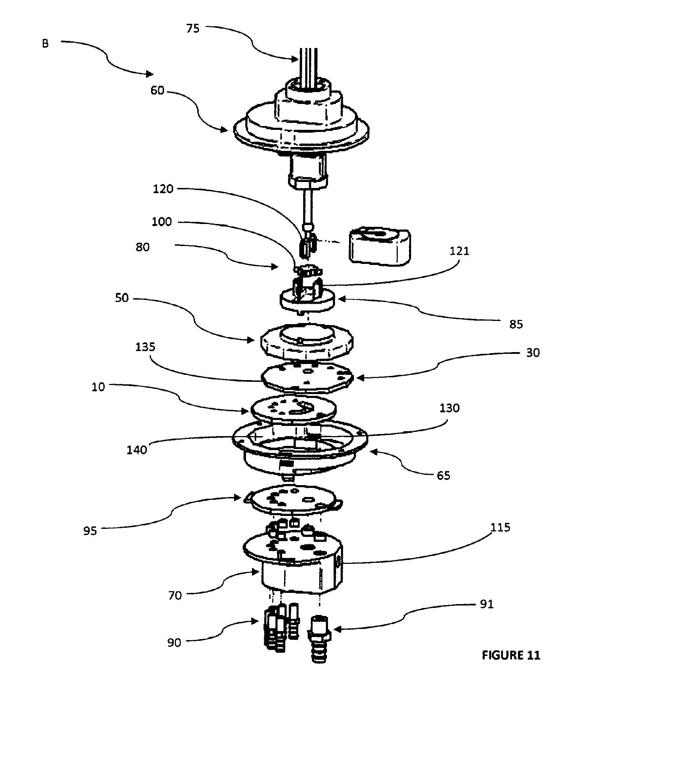

Referring now to figure 11 there is shown a liquid mixer valve in an exploded view. It is of benefit for the invention to offer feedback to the user to indicate the position of the second and third parts 30, 50 seen in figure 5 relative to the first part 10. In this instance positional feedback is integrated through springs 130 moulded into the casing part 65. These springs 130 locate against the flat edges 135 of the second and third parts 30, 50 so that the flat edges correspond to positions required for selection from mixer liquids and when a position is reached there is minimum resistance to rotational motion of the second and third parts 30, 50.

It is beneficial for rotation to be prevented upon linear motion of the second and third parts 30, 50 with respect to the first part 10 so as to eliminate the ability for the user to alter the mixer selection during the pour action of pulling the lever arm 75. In this instance this is achieved through geometric form of the casing part 65 having flat edges 140 corresponding to the flat edges 135 of the second and third parts 30, 50. Upon the user causing linear movement of the second and third parts 30, 50 with respect to the first part 10, the flat edges 135 of the second and third parts 30, 50 locate against the flat edges 140 of the casing part 65 preventing rotation.

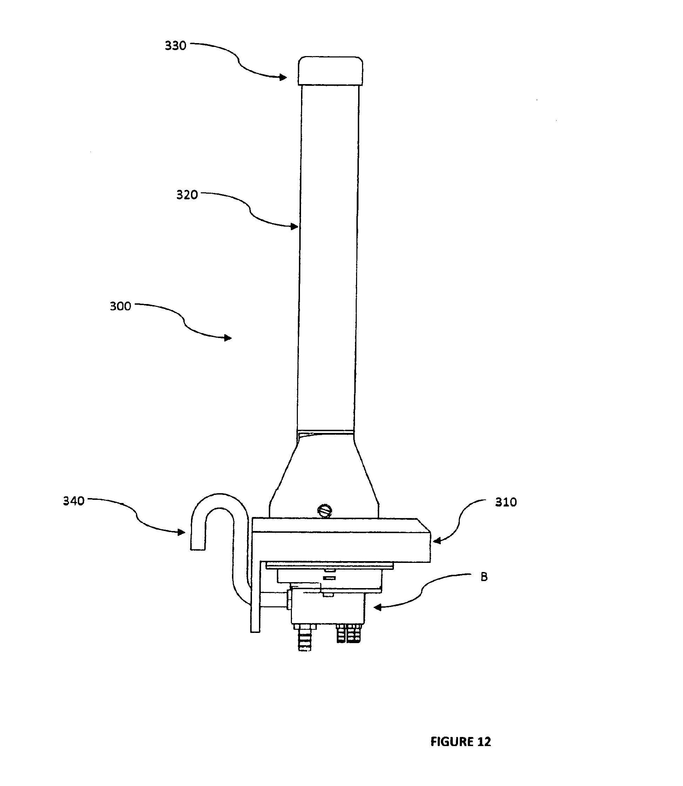

Referring now to figure 12 there is shown a liquid mixer valve B integrated within a bar pump 300. The liquid mixer valve B fits within the bar pump base 310 and is fixed in place using a suitable fixing method, in this instance bolts (not shown). The lever arm 75 shown in figure 11 is inserted into a handle 320 and fixed with an end cap 330 via a screw thread (not shown). A tap 340 is inserted into the orifice 115 shown in figure 11 via a suitable means, in this instance the screw thread 125 shown in figure 11. The base 310 can be attached to a surface by a suitable means such as wood screws or clamps for integration into pubs and bars.

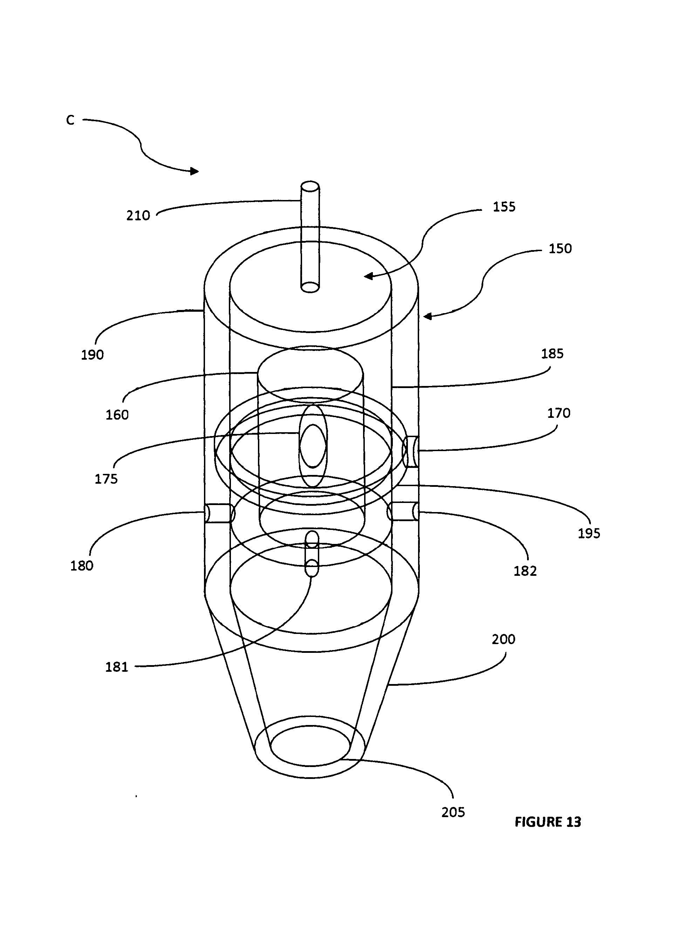

Referring now to figures 13, 14 and 15 there is shown a liquid mixer valve in an alternative embodiment C. A cylindrical first part 155 (selector part) is inserted within a second part 150 (inlet part) and seals against the wall of said second part. The first part 155 contains a chamber 160 (mixing chamber) open at one end in which mixer and base liquids combine before exiting the valve. Also the first part contains an inlet control orifice 175 which extends between the outer wall 185 and chamber 160 wall of the first part. The second part 150 comprises a hollow cylinder member having a cylindrical side wall 190 containing mixer inlet orifices 180, 181 and 182 which extend through said side wall to allow the delivery of mixer liquids to the valve and a base liquid inlet orifice 170 which extends through the side wall 190 and into a groove (recess) 195 which is partially extruded into the side wall 190 and forms a toroidal channel projecting into the side wall 190 of the first part 155 and extending around the second part 150. The groove 195 is in fluid communication with the base liquid inlet orifice 170 to allow the delivery of the base liquid to the valve. The second part 150 has a taper 200 at one end with an opening 205 through which the base and mixer liquids are able to flow during pouring.

In Figure 13 the first part 155 is shown in a first position (closed position) relative to the second part 150. During operation the first part 155 is rotated relative to the second part 150 to the first position in which the inlet control orifice 175 is linearly aligned (but not overlapping) with one of the mixer inlet orifices 180, 181, 182 to select a mixer liquid. In the position shown in Figure 13 the selected orifice is orifice 181.

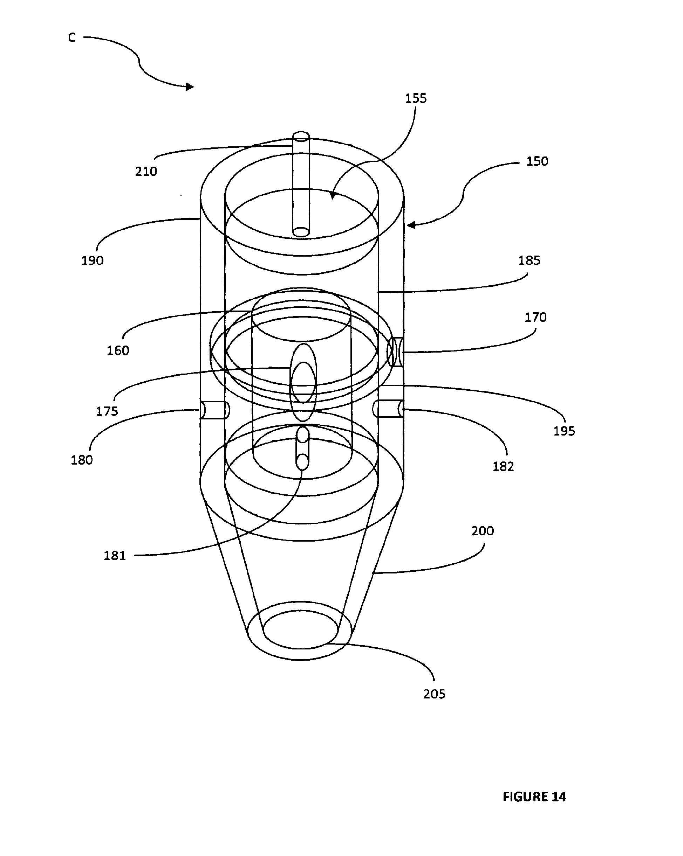

In figure 14 the first part 155 is shown in a second position (flush-through position) relative to the second part 150. The inlet control orifice 175 is in fluid communication with the groove 185 to allow the flow of the base liquid into the chamber 160 and through the outlet 205 in the second part 150.

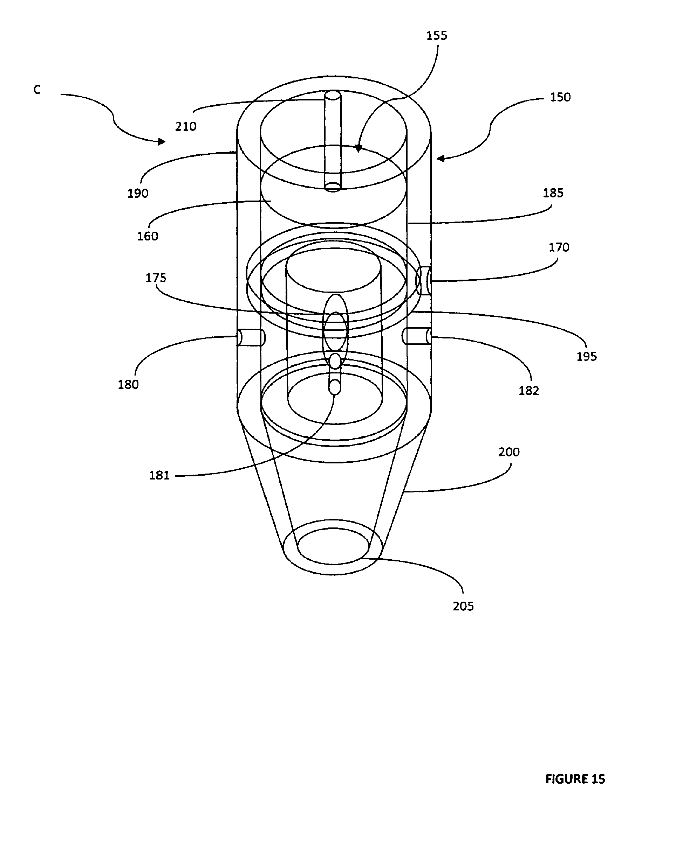

In figure 15 the first part 155 is shown in a third position (selection position) relative to a second part 150 where the inlet control orifice 175 is aligned with both the groove 185 and the mixer input orifice 181 causing the flow of both base and mixer liquids into the chamber 160 and through the outlet 205 in the second part 150.

During use of the valve C a user rotates the first part 155 relative to the second part 150 to select a mixer liquid in the first position, then moves the first part 155 linearly relative to the second part 150 through the second position to the third position to control the flow of the mixer and base liquids. During the return linear action the second and first positions are reached in that order causing a flush through the valve of base liquid to remove contamination of mixer liquids between pours. The liquid mixer valve shown in figure 13 would attach to a handle or other suitable means (not shown) for operation via the protrusion 210 to allow the rotation of the first part 155 relative to the second part 150 and the linear motion of the first part 155 relative to the second part 150. Through these operations the liquid mixer valve allows the user to select from a number of flavoured mixer liquids and combine them with a base cider, beer or perry to form a single output flavoured beverage which is output from the valve.

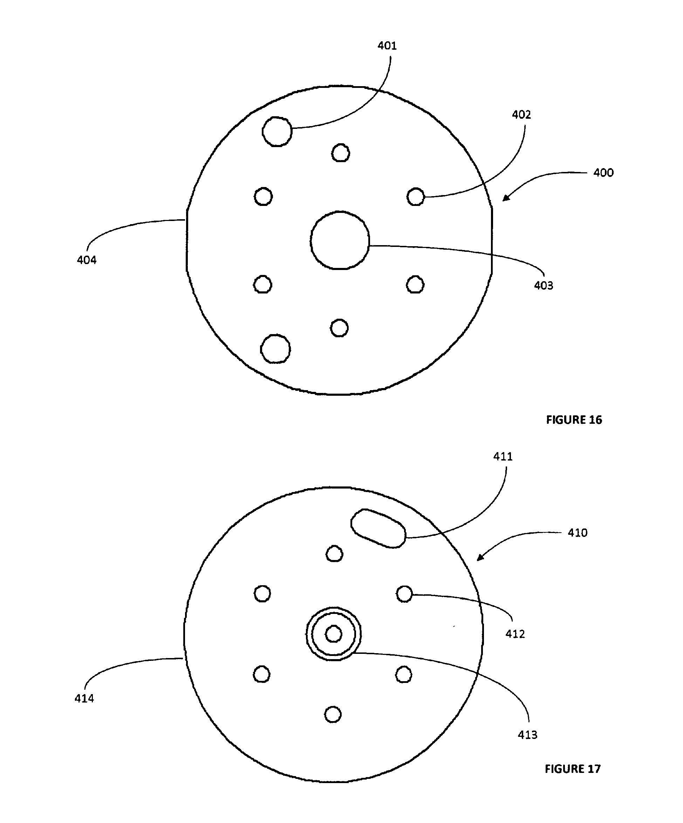

Referring now to figure 16 there is shown a first part 400 of a liquid mixer value formed according to another embodiment of the present invention. The first part 400 (inlet part) compromises a plate 404 with a pattern of mixer inlet orifices 402 which extend through the body, a base fluid inlet orifice 401 which extends through the body and an output orifice 403 which extends through the body. The pattern of mixer inlet orifices 402 is present as inputs for mixer liquids. The base fluid inlet orifice 401 is present as the input for a base liquid and the orifice 403 is present as a location point for other parts.

Referring now to figure 17 there is shown a second part 410 (flow control part) of a liquid mixer value formed according to this embodiment. The second part 410 compromises a plate 414 with a pattern of mixer flow control orifices 412 which extend through the body, a base liquid flow control orifice 411 which extends through the body and a pillar 413 which extends from the body. The pattern of mixer flow control orifices 412 is present as flow control for mixer liquids. The base liquid flow control orifice 411 is present as the flow control for a base liquid and the pillar 413 is present as a location point for other parts.

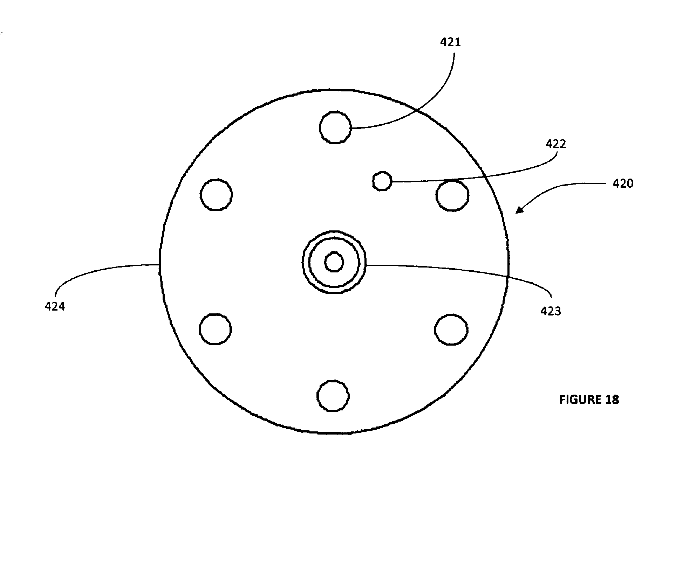

Referring now to figure 18 there is shown a third part 420 (selector part) of a liquid mixer value formed according to this embodiment. The third part 420 compromises a plate 424 with a pattern of base liquid inlet control orifices 421 which extend through the body, a mixer inlet selector orifice 422 which extends through the body and a pillar 423 which extends from the body. The pattern of base liquid inlet orifices 421 is present to allow flow of the base liquid. The mixer inlet selector orifice 422 is present as a selection orifice for the mixer liquids and the pillar 423 is present as a location point for other parts.

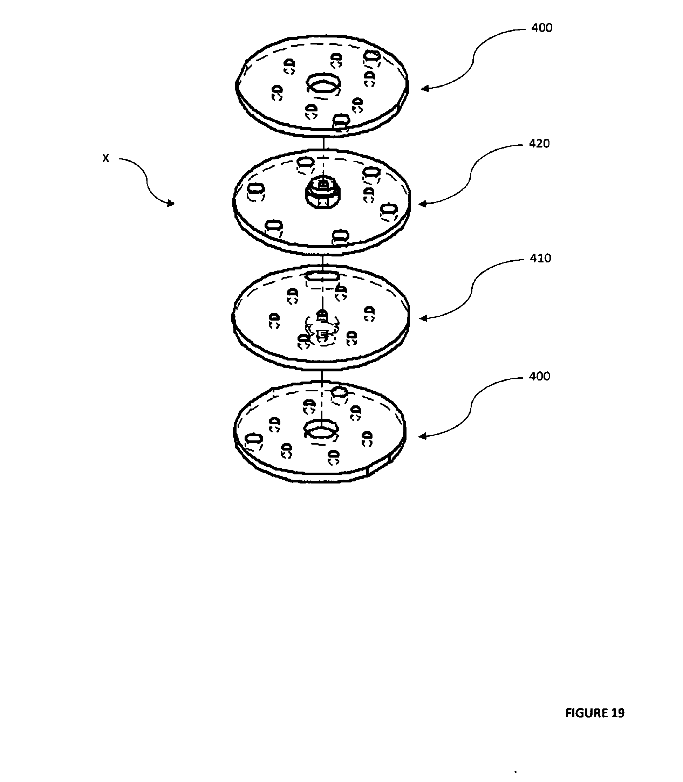

Referring now to figure 19 there is shown the sub assembly X of the parts in figure 16, figure 17 and figure 18 in an exploded view.

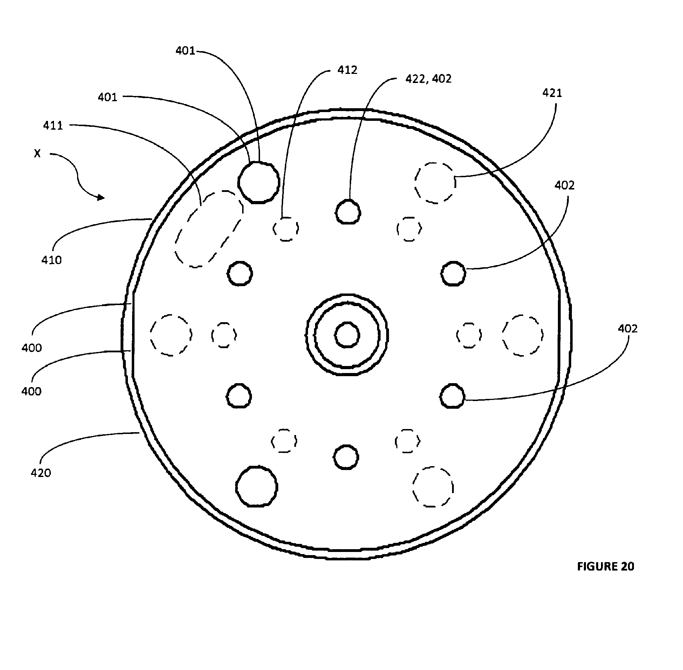

Referring now to figures 20, 21, and 22 the first, first repeat (i.e. duplicate of first part), second and third parts 400, 400, 410 and 420 are shown placed together to form a sub assembly A of a liquid mixer valve.

In figure 20 the second part 410 (flow control part) is shown in a first position (closed position) with respect to the first part 400 and first repeat part 400. In said first position the second part 410 has been rotated with respect to the first and first repeat parts to ensure no alignment of the base liquid flow control orifice 411 and mixer flow control orifices 412 present on the second part 410 with the base liquid input orifice 401 and the mixer inlet orifices 402 on the first part 400 and first repeat part 400, respectively, thus preventing flow of the base liquid and mixer liquid selected. The third part 420 is in a first position where the mixer selection orifice 422 present on the third part 420 is concentrically aligned with one of the desired mixer input orifices 402 present in the first part 400 and first repeat part 400.

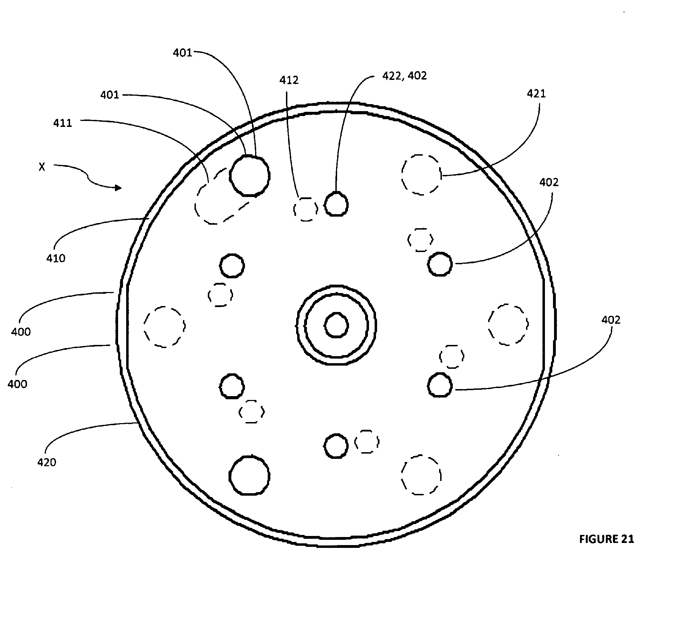

In figure 21 the second part 410 is shown in a second position (flush-through position) with respect to the first part 400 and first repeat part 400. In said second position the second part 410 has been rotated with respect to the first and first repeat parts to align the base liquid orifice 411 present on the second part 410 and the base input orifice 401 present on the first part 400 and first repeat part 400, respectively, to allow the flow of the base liquid through the valve. The mixer orifices 412 present on the third part 410 are misaligned with the mixer input orifices 402 present in the first part 400 and first repeat part 400 preventing flow of the mixer liquid through the valve. The third part 420 is in a first position where the selection orifice 422 present on the third part 420 is concentrically aligned with one of the desired mixer input orifices 402 present in the first part 400 and first repeat part 400.

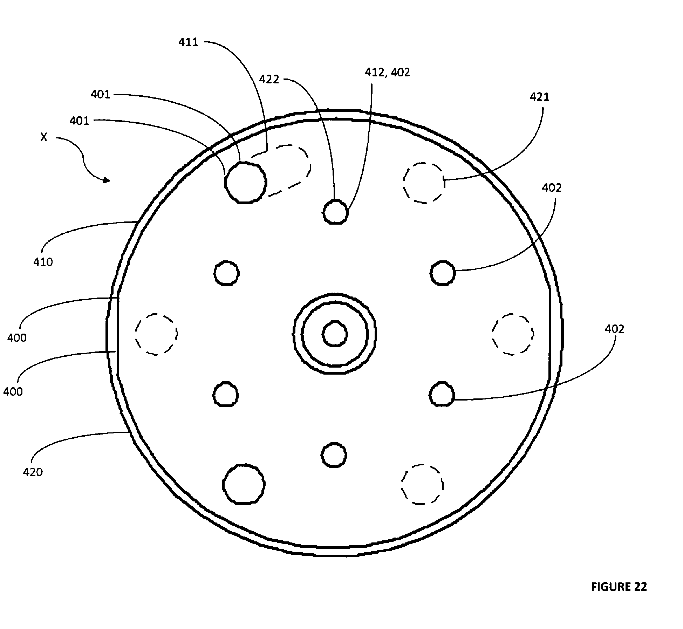

In figure 22 the second part 410 is shown in a third position (selection position) with respect to the first part 400 and first repeat part 400. In said second position the second part 410 has been rotated with respect to the first and first repeat parts to align the base liquid orifice 411 present on the second part 410 and the base input orifice 401 present on the first part 400 and first repeat part 400, respectively, to allow the flow of the base liquid through the valve. The mixer orifices 412 present on the third part 410 are aligned with the mixer input orifices 402 present in the first part 400 and first repeat part 400 allowing flow of the selected mixer liquid through the valve. The third part 420 is in a first position where the selection orifice 422 present on the third part 420 is concentrically aligned with one of the desired mixer input orifices 402 present in the first part 400 and first repeat part 400.

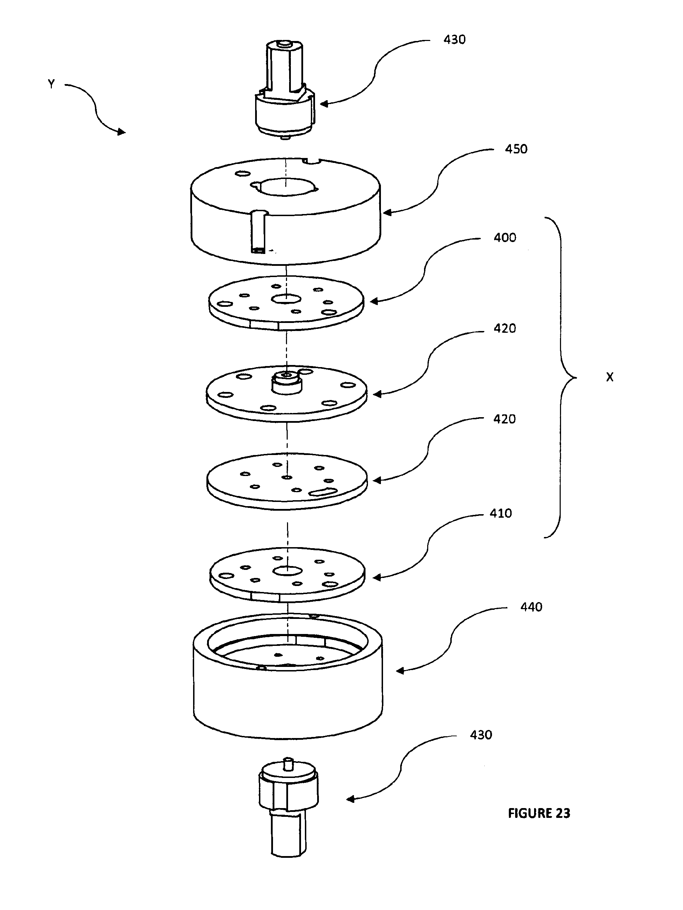

Referring now to figure 23 there is shown a liquid mixer valve Y of this embodiment in an exploded view. The sub assembly X is seen relative to its casing consisting of part 450 and part 440. The part 400 locates in part 450 so as to prevent rotational motion of part 400. Part 450 contains a mixing chamber (not shown) consisting of an orifice with or without a method of mechanical interference to encourage mixing of the base and mixer liquids. Liquids passing through orifices in part 400 are combined in said mixing chamber present within part 450 and output to the bar tap (not shown). Part 400 repeat is locates in part 440 so as to prevent rotational motion of part 400 and align the base input orifices and mixer input orifices present in part 400 with base input orifices (not shown) and mixer input orifices (not shown) present within part 450. Parts 430 consist of a geared electric motor and a potentiometer offering positional feedback. Parts 430 locate via a shaft which connects with parts 410 and 420 respectively offering a means of rotating parts 410 and 420 into the required positions previously discussed.

The motors 430 provide a means of rotating the flow control part 410 and selector part 420, respectively. The motors 430 may be controlled by a programmable controller (not shown) so that a user can select a desired base liquid and mixer combination using a joystick, keypad, dial, or similar, the electrical signals from which are received by the controller. The controller then executes a pre-set program to direct the motors 430 to arrange the flow control part 410 and selector part 420 in the correct positions for that base liquid and mixer combination.

An example of another pre-set program is a line cleaning program, or mode, in which the controller cycles between respective mixer dispensing configurations so that each mixer flow route/channel is opened one by one. In this way, a user can supply a cleaning fluid in place of the base fluid and each of the mixer fluids, and select the line cleaning mode so that the cleaning fluid is sequentially washed through each of the flow routes. The user can then supply clean water in place of the cleaning fluid and activate the line cleaning mode for a second time so that each of the flow routes is rinsed clean.

## Claims

1. A mixer valve for dispensing a mixed beverage, the mixer valve having:
an inlet body and a selector body having respective faces opposed to one another,
the inlet body comprising:
a base liquid inlet channel arranged to receive a base liquid and having an opening at the face of the inlet body;
a first mixer inlet channel arranged to receive a first mixer liquid and having an opening at the face of the inlet body; and
a second mixer inlet channel arranged to receive a second mixer liquid and having an opening at the face of the inlet body, and
the selector body comprising:
one or more base liquid control channels, the or each channel having an opening at the face of the selector body; and
a mixer inlet selection channel having an opening at the face of the selector body,
wherein the respective openings of the respective channels are arranged with respect to each other such that relative movement of the opposing faces of the inlet body and selector body permits switching between:
a first selection configuration in which the opening of the base liquid control channel or the opening of one of the base liquid control channels of the selector body overlaps with the opening of the base liquid inlet channel of the inlet body, and the opening of the mixer inlet selector channel of the selector body overlaps with the opening of the first mixer inlet channel of the inlet body; and
a second selection configuration in which the opening of the base liquid control channel or the opening of one of the base liquid control channels of the selector body overlaps with the opening of the base liquid inlet channel of the inlet body, and the opening of the mixer inlet selector channel of the selector body overlaps with the opening of the second mixer inlet channel of the inlet body.

2. A valve according to claim 1, wherein the respective openings of the respective channels of the selector body and inlet body are arranged with respect to each other such that relative movement of the inlet body and selector body by relative sliding of the opposing faces permits switching between the first or second selection configuration and a flush-through configuration in which the opening of the base liquid control channel or the opening of one of the base liquid control channels of the selector body overlaps with the opening of the base liquid inlet channel of the inlet body, and there is no overlap between the opening of the mixer inlet selector channel of the selector body and the openings of the first or second mixer inlet channels of the inlet body.

3. A valve according to claim 1 or claim 2, including a motor arranged to move the selector body relative to the inlet body and a controller arranged to control the motor, the controller having a line cleaning mode in which it controls the motor to switch the valve between the first selection configuration and second configuration.

4. A mixer valve according to any of the preceding claims, wherein the selector body is rotatable relative to the inlet body about a rotation axis to permit the relative movement of the inlet body and selector body by relative sliding of the opposing faces.

5. A mixer valve according to claim 4, wherein the selector body is slidable relative to the inlet body so that the rotation axis of the selector body moves linearly with respect to the inlet body, the sliding permitting switching between the first or second switching configuration and a closed configuration in which there is no overlap of the openings of the channels of the inlet body and the openings of the channels of the selector body.

6. A mixer valve according to claim 4, wherein the valve includes a flow control body having a face opposed to a face of the selector body, the flow control body being rotatable relative to the selector body about the rotation axis of the selector body, and the flow control body comprising:
a base liquid flow control channel having an opening at the face of the flow control body;
a first mixer flow control channel having an opening at the face of the flow control body; and
a second mixer flow control channel having an opening at the face of the flow control body,
wherein the respective openings of the respective channels of the flow control body are arranged with respect to each other such that relative rotation of the flow control body and the selector body by relative sliding of the opposed faces permits switching between the first or second selection configuration and a closed configuration in which there is no overlapping of the openings of the channels of the selector body and the openings of the channels of the flow control body.

7. A valve according to any of the preceding claims, wherein the valve includes a mixing chamber in fluid communication with the one or more base liquid control channels and the mixer inlet selection channel of the selector body.

8. A valve according to any of claims 1 to 7, wherein the inlet body and selector body comprise plate members, each of the respective channels extending through the thickness of the respective plate member.

9. A valve according to any of claims 1 to 7, wherein the selector body comprises a hollow cylindrical member having an inner surface forming the face of the selector body, and the inlet body comprises a cylindrical member having an outer surface forming the face of the inlet body, the cylindrical member being located within the hollow cylindrical member of the selector body so that its outer surface is in sealing contact with the inner surface of the hollow cylindrical member.

10. Use of a mixer valve according to any of the preceding claims to mix cider, perry or beer with a flavoured mixer liquid.

11. A method of mixing a beverage using a mixer valve, the mixer valve having:
an inlet body and a selector body having respective faces opposed to one another,
the inlet body comprising:
a base liquid inlet channel arranged to receive a base liquid and having an opening at the face of the inlet body;
a first mixer inlet channel arranged to receive a first mixer liquid and having an opening at the face of the inlet body; and
a second mixer inlet channel arranged to receive a second mixer liquid and having an opening at the face of the inlet body, and
the selector body comprising:
one or more base liquid control channels, the or each channel having an opening at the face of the selector body; and
a mixer inlet selection channel having an opening at the face of the selector body,
the method including the step of moving the selector body relative to the inlet body by relative sliding of the opposed faces to achieve either:
overlap of the opening of the base liquid control channel or the opening of one of the base liquid control channels of the selector body with the opening of the base liquid inlet channel of the inlet body, and simultaneous overlap of the opening of the mixer inlet selector channel of the selector body with the opening of the first mixer inlet channel of the inlet body; or
overlap of the opening of the base liquid control channel or the opening of one of the base liquid control channels of the selector body with the opening of the base liquid inlet channel of the inlet body, and simultaneous overlap of the opening of the mixer inlet selector channel of the selector body with the opening of the second mixer inlet channel of the inlet body.

12. A method of line cleaning using a mixer valve according to any of claims 1 to 9, the method including the steps of:
inputting a cleaning fluid into the base fluid inlet channel, first mixer inlet channel and second fluid inlet channel;
selecting the first selection configuration, whereby the cleaning fluid passes from the base fluid inlet channel into the base liquid control channel and from the first mixer inlet channel into the mixer inlet selection channel; and
selecting the second selection configuration, whereby the cleaning fluid passes from the base fluid inlet channel into the base liquid control channel and from the second mixer inlet channel into the mixer inlet selection channel.
